(19) Europäisches Patentamt
European Patent Office
Office européen des brevets

(11) Veröffentlichungsnummer: **0 356 393 B1**

(12) **EUROPÄISCHE PATENTSCHRIFT**

(45) Veröffentlichungstag der Patentschrift: **25.01.95**

(51) Int. Cl.$^{6}$: **C07C 245/20**, C09B 41/00, D06P 1/02

(21) Anmeldenummer: **89810609.1**

(22) Anmeldetag: **16.08.89**

# (54) Verfahren zur Herstellung von metallisierbaren Monoazofarbstoffen.

(30) Priorität: **24.08.88 CH 3136/88**

(43) Veröffentlichungstag der Anmeldung:
**28.02.90 Patentblatt 90/09**

(45) Bekanntmachung des Hinweises auf die Patenterteilung:
**25.01.95 Patentblatt 95/04**

(84) Benannte Vertragsstaaten:
**BE CH DE ES FR GB LI**

(56) Entgegenhaltungen:
**EP-A- 0 036 116**
**EP-A- 0 320 446**
**DE-A- 2 139 311**
**EP-A- 0 307 457**
**EP-A- 0 320 447**
**FR-A- 980 649**

(73) Patentinhaber: **CIBA-GEIGY AG**
**Klybeckstrasse 141**
**CH-4002 Basel (CH)**

(72) Erfinder: **Schlesinger, Ulrich, Dr.**
**Im untern Wörth 39**
**D-7852 Binzen (DE)**
Erfinder: **Loew, Peter, Dr.**
**Concordiastrasse 23**
**CH-4142 Münchenstein (CH)**
Erfinder: **Püntener, Alois, Dr.**
**Pulverweg 13**
**CH-4310 Rheinfelden (CH)**

**EP 0 356 393 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Kupplung von diazotierten o-Hydroxyaminobenzolen oder o-Aminonaphtholen auf einige Kupplungskomponenten, z.B. Phenole, Aniline, Naphthole oder Naphthylamine, die in o-Stellung zur Hydroxy- oder Aminogruppe kuppeln, verläuft in einigen Fällen zu langsam und nur mit unbefriedigenden Ausbeuten.

In den letzten Jahren ist man zunehmend bestrebt, Herstellungsverfahren für Farbstoffe und deren Zwischenprodukte zu automatisieren und zu optimieren, und zwar sowohl was den Herstellungsprozess anbetrifft, als auch hinsichtlich der Aufarbeitung. Um hier zu befriedigenden Ergebnissen zu gelangen, ist man auf Verfahren angewiesen, die sich durch die folgenden Kriterien auszeichnen: möglichst quantitative Ausbeute, reproduzierbare gute Qualität sowie Umsetzungen in kürzeren Zeiteinheiten.

Es wurde nun gefunden, dass man diese Ziele mit dem erfindungsgemässen Verfahren weitgehend erreichen kann.

Das erfindungsgemässe Verfahren zur Herstellung von Azofarbstoffen der Formel

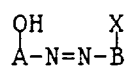

(1),

worin X $-NH_2$ oder -OH, A ein Benzol- oder Naphthalinrest, der durch Nitro, Halogen, Sulfo, $C_2$-$C_6$-Alkanoylamino, $C_1$-$C_6$-Alkoxycarbonylamino, Sulfonamido- und Sulfongruppen substituiert sein kann, ist, und B ein Benzolrest, der durch $C_1$-$C_6$-Alkyl ein- oder zweifach substituiert ist, oder ein Naphthalinrest, der durch Amino, Phenylamino, $C_1$-$C_6$-Alkylamino und Sulfo substituiert sein kann, oder ein 1-Phenyl-3-methyl-5-pyrazolonrest, der durch Halogen, $C_1$-$C_6$-Alkyl und $C_1$-$C_6$-Alkoxy substituiert sein kann, ist, wobei diese Reste in o-Stellung zu den Hydroxy- oder Aminogruppen an die Azogruppe gebunden sind, ist dadurch gekennzeichnet, dass man in wässriger Lösung ein Amin der Formel

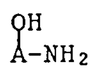

(2),

in Gegenwart von mindestens einem Keton der Formel

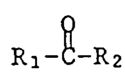

(3),

worin $R_1$ und $R_2$ unabhängig voneinander je $C_1$-$C_4$-Alkyl bedeuten, diazotiert und auf eine Kupplungskomponente der Formel

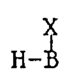

(4)

kuppelt, wobei das Diazotierungsprodukt nicht zwischenisoliert wird und A, B und X in den Formeln (2) und (4) die unter Formel (1) angegebenen Bedeutungen haben.

Als $C_2$-$C_6$-Alkanoylamino kommen z.B. Acetylamino, Propionylamino und Butyrylamino in Betracht.

Als $C_1$-$C_6$-Alkoxycarbonylamino kommen z.B. Methoxycarbonylamino und Aethoxycarbonylamino in Betracht.

Als $C_1$-$C_6$-Alkyl kommen z.B. Methyl, Aethyl, Propyl, Isopropyl, Butyl, sek.-Butyl, tert.-Butyl, Isobutyl, Pentyl und Hexyl in Betracht.

Als $C_1$-$C_6$-Alkoxy kommen z.B. Methoxy, Aethoxy, Propoxy, Isopropoxy und Butoxy in Betracht.

Als Halogen kommen z.B. Fluor, Brom und insbesondere Chlor in Betracht.

Als Sulfonamido kommen z.B. $-SO_2NH_2$, $-SO_2NHC_1$-$C_6$-Alkyl, wie z.B. $-SO_2NHCH_3$ und $-SO_2NHC_2H_5$ und $-SO_2N(C_1$-$C_6$-Alkyl$)_2$, wie z.B. $-SO_2N(CH_3)_2$ und $-SO_2N(C_2H_5)_2$) sowie

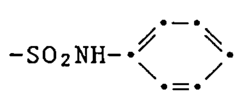

,

wobei der Phenylrest substituiert sein kann, z.B. durch Sulfo oder Carboxy, in Betracht.

Als Sulfon kommt z.B. $-SO_2-C_1-C_6$-Alkyl, wie $-SO-CH_3$, und $-SO_2$-Aryl, wie Phenylsulfonyl, in Betracht.

Als $C_1-C_6$-Alkylamino kommen z.B. Methylamino, Aethylamino, Propylamino, Butylamino, Heptylamino und Hexylamino in Betracht.

Die Diazo- und Kupplungskomponenten, die nach dem erfindungsgemässen Verfahren bevorzugt umgesetzt werden können, sind o-Aminophenole, die durch Nitro, Halogen, wie Fluor, Chlor oder Brom, und Sulfo substituiert sein können, oder o-Aminonaphthole, die durch Sulfo und Nitro substituiert sein können, Aniline oder Phenole, die jeweils durch $C_1-C_6$-Alkyl, wie z.B. Methyl, Aethyl, Propyl, Isopropyl, Butyl, sek.-Butyl, Isobutyl und tert.-Butyl substituiert sein können, Naphthylamine oder Naphthole, die jeweils durch Amino, Phenylamino und Sulfo substituiert sein können, oder 1-Phenyl-3-methyl-5-pyrazolone, die im Phenylrest durch $C_1-C_4$-Alkyl, wie z.B. Methyl, Aethyl, Propyl, Isopropyl, Butyl, sek.-Butyl, Isobutyl und tert.-Butyl, Halogen, wie z.B. Fluor, Brom oder insbesondere Chlor, und Sulfo substituiert sein können. Bei den Kupplungskomponenten ist die Kupplungsstelle die Nachbarposition zu der Hydroxy- oder Aminogruppe.

Ganz besonders bevorzugt werden in dem erfindungsgemässen Verfahren als Amine der Formel (2) 2-Amino-5-nitrophenol, 2-Amino-4-nitrophenol, 2-Amino-4-chlor-5-nitrophenol, 2-Amino-4-chlor-6-nitrophenol, 2-Amino-4-sulfo-6-nitrophenol, 2-Amino-4,6-dichlorphenol, 2-Amino-4-nitro-6-sulfophenol, 1-Amino-2-hydroxy-4-sulfonaphthalin oder 1-Amino-2-hydroxy-6-nitro-4-sulfonaphthalin und als Kupplungskomponente der Formel (4) 4-tert.-Butylphenol, 1-Hydroxynaphthalin-4-sulfonsäure, 1-Hydroxynaphthalin-5-sulfonsäure, 2-Hydroxynaphthalin, 1-Hydroxy-6- oder -7-aminonaphthalin-3-sulfonsäure,1-Hydroxy-8-aminonaphthalin-3,6-disulfonsäure oder 1-Phenyl-3-methyl-5-pyrazolon verwendet, insbesondere wird als Kupplungskomponente der Formel (4) 4-tert.-Butylphenol, 1-Hydroxynaphthalin-4-sulfonsäure, 1-Hydroxynaphthalin-5-sulfonsäure, 2-Hydroxynaphthalin, 1-Hydroxy-8-aminonaphthalin-3,6-disulfonsäure oder 1-Phenyl-3-methyl-5-pyrazolon verwendet.

Als Verbindungen der Formel (3) kommen z.B. Dimethyl-, Methyläthyl-, Diäthyl-, Methylpropyl-, Aethylpropyl-, Dipropyl-, Methylisopropyl-, Aethylisopropyl, Propylisopropyl-, Diisopropyl-, Methylbutyl-, Aethylbutyl-, Propylbutyl-, Dibutyl-, Methyl-tert.-butyl-, Aethyl-tert.-butyl-, Propyl-tert.butyl-, Isopropyl-tert.-butyl-, Butyl-tert.-butyl-, Methyl-sek.-butyl-, Aethyl-sek.-butyl-, Butyl-sek.-butyl-, Methylisobutyl-, Aethylisobutyl-, Isopropylisobutyl-, tert.-Butylisobutyl- und Di-sek.-butylketon in Betracht.

Für das erfindungsgemässe Verfahren sind Verbindungen der Formel (3), in denen $R_1$ und $R_2$ unabhängig voneinander je Methyl oder Aethyl bedeuten, bevorzugt.

Für das erfindungsgemässe Verfahren ist eine Verbindung der Formel (3), worin $R_1$ Methyl und $R_2$ Aethyl bedeuten, besonders bevorzugt.

EP-A-0 307 457, EP-A-0 320 446 und EP-A-0 320 447, deren Inhalt gemäß Artikel 54(3) und 54(4) EPÜ für die vorliegende Anmeldung als Stand der Technik gilt, beschreiben Azofarbstoffen der Formel (1),

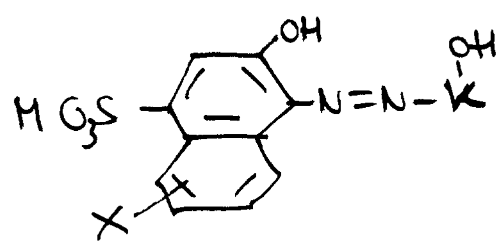

(1)

worin K der Rest einer Kupplungkomponente der Benzol oder Naphthalinteile ist, wobei die Hydroxygruppe in Nachbarstellung der Azogruppe an K gebunden ist.

Die Diazotierung des Amins der Formel (2) erfolgt in Gegenwart von Ketonen der Formel (3) und wird nach sonst an sich bekannter Verfahrensweise, z.B. durch Einwirken salpetriger Säure in wässrig-mineralsaurer Lösung bei tiefer Temperatur, durchgeführt.

Die Kupplung erfolgt nach an sich bekannter Verfahrensweise in wässriger Lösung bei einem pH-Wert von ca. 7,0 bis 8,5.

Für das erfindungsgemässe Verfahren verwendet man bei der Diazotierungsreaktion z.B. die 1- bis 40-fache molare Menge von Ketonen der Formel (3), bezogen auf die Molmenge der Diazokomponente.

In einer bevorzugten Ausführungsform des erfindungsgemässen Verfahrens wird die Diazotierungsreaktion in Gegenwart der 1- bis 40-fachen molaren Menge von Ketonen der Formel (3), insbesondere der 3- bis 12-fachen molaren Menge, bezogen auf die Molmenge der Diazokomponente, ausgeführt; vorzugsweise verwendet man die 3- bis 10-fach molare Menge von Ketonen der Formel (3).

Eine weitere bevorzugte Ausführungsform des erfindungsgemässen Verfahrens ist dadurch gekennzeichnet, dass man bei einer Temperatur von 0 bis 40 °C kuppelt. Insbesondere erfolgt die Kupplung adiabatisch.

Die Verwendung von Ketonen bringt bei der erfindungsgemässen Herstellung der Azofarbstoffe folgende Vorteile:

- Die Ausbeuten werden deutlich gesteigert.
- Das Umsetzungsprodukt zeigt eine bessere Qualität, d.h. die Anzahl und die Menge der Nebenprodukte ist gering.
- Die Kupplung kann bei höheren Temperaturen ausgeführt werden, d.h. die Umsetzungen erfolgen in kürzerer Zeit und es kann mehr Produkt pro Zeiteinheit hergestellt werden.
- Die Ketone können im Anschluss an die Kupplung zurückgewonnen werden.

Eine ganz besonders wichtige Ausführungsform des erfindungsgemässen Verfahrens ist dadurch gekennzeichnet, dass man nach beendeter Kupplung den gebildeten Monoazofarbstoff von den Ketonen durch Destillation, insbesondere Vakuumdestillation der Ketone, vorzugsweise bei einem pH-Wert von 4 bis 10, abtrennt und den ausgefallenen Monoazofarbstoff abfiltriert.

Es besteht auch die Möglichkeit, das Keton durch Filtration vom Farbstoff zu trennen und das Keton anschliessend durch Destillation vom Filtrat zu trennen.

Die Destillation wird besonders bevorzugt bei einem pH-Wert von 6 bis 8 durchgeführt.

Bei der oben angegebenen Verfahrensweise des erfindungsgemässen Verfahrens können die Ketone zurückgewonnen werden; die eingesetzten Ketone stehen somit für eine weitere Umsetzung zur Verfügung.

Kupplungsreaktionen, die nur in unbefriedigender Weise Azofarbstoffe liefern, führen in der Regel zu einer Belastung des Abwassers, denn unumgesetzte Komponenten lassen sich häufig nur unvollständig vom verwendeten Lösungsmittel, in der Regel Wasser, abtrennen.

Aus diesem Grund wurden schon seit geraumer Zeit solchen Kupplungsreaktionen, die nur in unbefriedigender Weise Azofarbstoffe liefern, Kupplungszusätze beigegeben, um die Umsetzung zu vervollständigen und gegebenenfalls zu beschleunigen; beispielsweise werden Naphthalinsulfonsäuren als Kupplungsbeschleuniger verwendet. Zwar kann die Kupplungsausbeute bei dieser Verfahrensweise verbessert werden, jedoch lassen sich diese Hilfsmittel, insbesondere Naphthalinsulfonsäuren nur unvollständig und aufwendig aus der Kupplungsmasse abtrennen.

Die Verwendung von Ketonen bringt somit nicht nur den Vorteil mit sich, dass die Kupplungsausbeute deutlich gesteigert wird und die Umsetzungen in kleineren Zeiteinheiten erfolgen können, sondern dass die Ketone zurückgewonnen werden können.

Aus der FR-A-980 649 ist ein Verfahren zur Diazotierung aromatischer Amine in Gegenwart von aliphatischen Ketonen bekannt.

Die nach dem erfindungsgemässen Verfahren erhaltenen Monoazofarbstoffe eignen sich zur Herstellung von Metallkomplexazofarbstoffen wie z.B. Chrom- oder Kobaltkomplexazofarbstoffen, wobei die Metallisierung nach an sich bekannten Methoden erfolgt. Die Metallkomplexazofarbstoffe, insbesondere die Chromierungsfarbstoffe, eignen sich zum Färben von Leder und insbesondere von Wolle und Fasermaterialien aus synthetischem Polyamid.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

<u>Beispiel 1</u>: 15,7 Teile 2-Amino-5-nitrophenol werden in 40 Teile Methyläthylketon eingetragen. Hierzu werden 50 Teile Wasser und 13,8 Teile Salzsäure (33 %) gegeben und die 2-phasige Lösung anschliessend auf 0 bis 5° gekühlt. Innert 15 Minuten werden 17,7 Teile Natriumnitrit-Lösung (50 %) zugegeben, 10 Minuten nachgerührt und mit Sulfaminsäure das überschüssige Nitrit vernichtet.

Bei 50-60° wird eine Lösung von 23,5 Teilen 1-Naphthol-4-sulfonsäure, 2,5 Teilen Natronlauge und 127,5 Teilen Wasser bei einem pH-Wert von 7,7 hergestellt, auf 0 bis 5° abgekühlt und zur erhaltenen Diazoverbindung zugegeben.

Es wird 5 Stunden bei 0° bis 5° und einem pH-Wert von 7,3 bis 7,6 nachgerührt bis keine Diazoverbindung mehr nachgewiesen werden kann.

Die Suspension wird auf Raumtemperatur erwärmt, der pH mit wenig Salzsäure auf einen Wert von 6,5 eingestellt, bei 50 bis 60° das Methyläthylketon im Vakuum abdestilliert, die Temperatur auf Raumtemperatur gesenkt, der ausgefallene Monoazofarbstoff abfiltriert und mit Wasser gewaschen.

Man erhält eine rotbraune Farbstoffpaste, welche den Farbstoff, der in Form der freien Säure der Formel

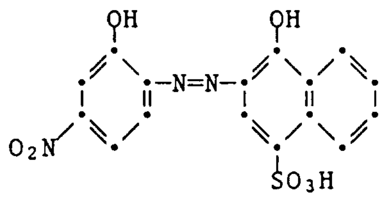

(101)

entspricht, mit einer Kupplungsausbeute von 88 bis 90 % der Theorie enthält.

Verfährt man wie oben angegeben, destilliert jedoch nicht bei 50 bis 60° das Methyläthylketon ab, sondern filtriert die Farbstoff-Suspension ab, so wird der gleiche Farbstoff erhalten. Das Filtrat wird mit 2 x 25 Teilen Wasser gewaschen und das Methyläthylketon durch Destillation bei 50 bis 60° im Vakuum zurückgewonnen.

Beispiele 2 bis 7: Wenn man wie in Beispiel 1 angegeben verfährt, jedoch statt 40 Teile Methyläthylketon die in Tabelle 1 in Spalte 2 angegebenen Mengen Methyläthylketon verwendet, so wird der gleiche Farbstoff erhalten.

Tabelle 1

| Beispiele | Teile Methyläthylketon |
|---|---|
| 2 | 14 Teile |
| 3 | 20 Teile |
| 4 | 31 Teile |
| 5 | 50 Teile |
| 6 | 86 Teile |
| 7 | 104 Teile |

Beispiel 8: Wenn man wie in Beispiel 1 angegeben verfährt und anstelle von 15,7 Teilen 2-Amino-5-nitrophenol 18,9 Teile 2-Amino-4-chlor-5-nitrophenol und anstelle von 23,5 Teilen 1-Naphthol-4-sulfonsäure 22,4 Teile 1-Naphthol-5-sulfonsäure verwendet, so erhält man bei sonst identischer Verfahrensweise einen Farbstoff, der in Form der freien Säure der Formel

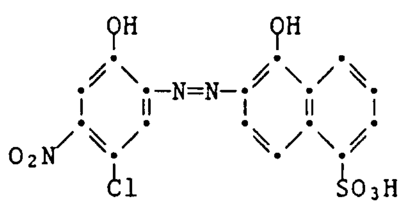

(102)

entspricht, in gleich guter Ausbeute.

Beispiel 9: Wenn man wie in Beispiel 8 angegeben verfährt, jedoch die bei 50 bis 60° hergestellte Lösung von 22,4 Teilen 1-Naphthol-5-sulfonsäure, 2,5 Teilen Natronlauge und 127,5 Teilen Wasser statt auf 0 bis 5° auf 40° abkühlt, zur erhaltenen Diazoverbindung zugibt und anschliessend bei 40° und einem pH-Wert von 7,3 bis 7,6 ca. 5 Minuten nachrührt, erhält man bei sonst identischer Verfahrensweise den gleichen Farbstoff.

Beispiel 10: Wenn man wie in Beispiel 8 angegeben verfährt, jedoch statt 40 Teilen Methyläthylketon eine äquimolare Menge Diäthylketon verwendet, so erhält man bei sonst identischer Verfahrensweise den gleichen Farbstoff.

Beispiel 11: Man diazotiert 18,9 Teile 2-Amino-4-chlor-5-nitrophenol wie in Beispiel 1 angegeben.

Bei 50 bis 55° wird eine Lösung von 17,4 Teilen 1-Phenyl-3-methyl-5-pyrazolon, 4 Teilen Natronlauge und 100 Teilen Wasser bei einem pH-Wert von 11 bis 12 hergestellt. Danach wird der pH-Wert mit Salzsäure auf 7 bis 7,5 gesenkt, die Suspension auf 0 bis 5° abgekühlt und zur erhaltenen Diazoverbindung gegeben.

Es wird ca. 5 Stunden bei 0 bis 5° und einem pH-Wert von 7 bis 7,5 nachgerührt bis keine Diazoverbindung mehr nachgewiesen werden kann.

Die Suspension wird auf Raumtemperatur erwärmt, der pH mit wenig Salzsäure auf einen Wert von 6,5 eingestellt, bei 50 bis 60° das Methyläthylketon im Vakuum abdestilliert, die Temperatur auf Raumtemperatur gesenkt, der ausgefallene Monoazofarbstoff abfiltriert und mit Wasser gewaschen.

Man erhält einen Farbstoff, der in Form der freien Säure der Formel

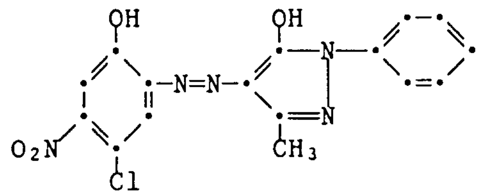

(103)

entspricht, in einer Ausbeute von 89,5 % der Theorie.

Vergleichsbeispiel: Wenn man wie in Beispiel 11 angegeben verfährt, jedoch statt 40 Teilen Methyläthylketon 21 Teile Naphthalin-1-sulfonsaure verwendet, so erhält man den gleichen Farbstoff in einer Ausbeute von 79,1 % der Theorie.

Beispiele 12 bis 16: Wenn man wie in Beispiel 1 angegeben verfährt, jedoch statt 15,7 Teilen 2-Amino-5-nitrophenol eine äquimolare Menge eines der in Tabelle 2 in Spalte 2 angegebenen Amine und statt 23,5 Teilen 1-Naphthol-4-sulfonsäure eine äquimolare Menge einer der in Tabelle 2 in Spalte 3 angegebenen Kupplungskomponenten verwendet, so erhält man die in Tabelle 2 in Spalte 4 in Form der freien Säuren angegebenen Farbstoffe.

Tabelle 2

| Bsp. | Amin | Kupplungs-komponente | Farbstoff |
|---|---|---|---|
| 12 | 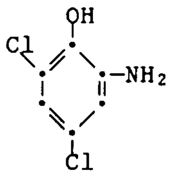 | 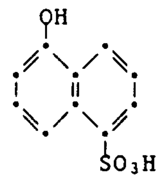 | 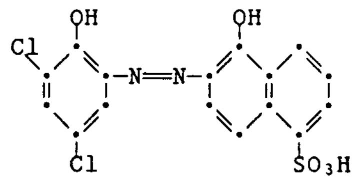 (104) |
| 13 | 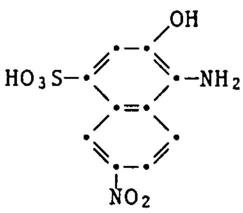 | 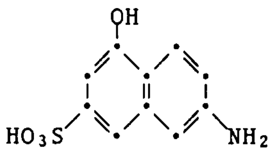 | 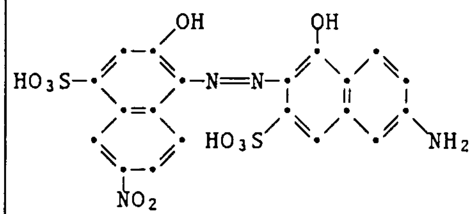 (105) |
| 14 | 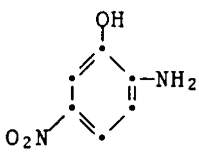 | 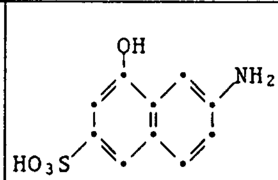 | 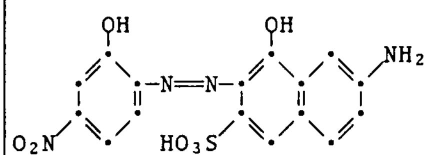 (106) |
| 15 | 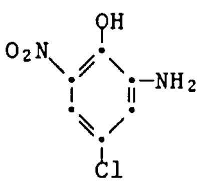 | 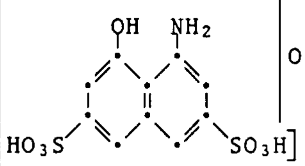 | 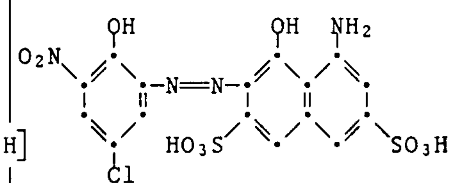 (107) |
| 16 | 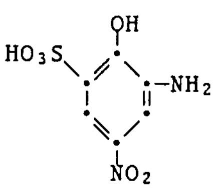 | 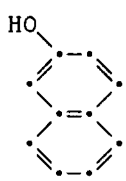 | 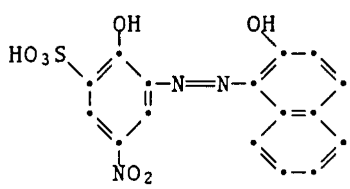 (108) |

## Patentansprüche

1. Verfahren zur Herstellung von Azofarbstoffen der Formel

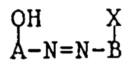

(1),

worin X $-NH_2$ oder -OH, A ein Benzol- oder Naphthalinrest, der durch Nitro, Halogen, Sulfo, $C_2$-$C_6$-Alkanoylamino, $C_1$-$C_6$-Alkoxycarbonylamino, Sulfonamido- und Sulfongruppen substituiert sein kann, ist, und B ein Benzolrest, der durch $C_1$-$C_6$-Alkyl ein- oder zweifach substituiert ist, oder ein Naphthalinrest, der durch Amino, Phenylamino, $C_1$-$C_6$-Alkylamino und Sulfo substituiert sein kann, oder ein 1-Phenyl-3-methyl-5-pyrazolonrest, der durch Halogen, $C_1$-$C_6$-Alkyl und $C_1$-$C_6$-Alkoxy substituiert sein kann, ist, wobei diese Reste in o-Stellung zu den Hydroxy- oder Aminogruppen an die Azogruppe gebunden sind, dadurch gekennzeichnet, dass man in wässriger Lösung ein Amin der Formel

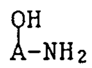

(2),

in Gegenwart mindestens eines Ketons der Formel

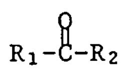

(3),

worin $R_1$ und $R_2$ unabhängig voneinander je $C_1$-$C_4$-Alkyl bedeuten, diazotiert und auf eine Kupplungskomponente der Formel

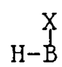

(4)

kuppelt, wobei das Diazotierungsprodukt nicht zwischenisoliert wird und A, B und X in den Formeln (2) und (4) die unter Formel (1) angegebenen Bedeutungen haben.

2. Verfahren gemäss Anspruch 1, dadurch gekennzeichnet, dass $R_1$ und $R_2$ unabhängig voneinander je Methyl oder Aethyl bedeuten.

3. Verfahren gemäss Anspruch 1, dadurch gekennzeichnet, dass $R_1$ Methyl und $R_2$ Aethyl bedeutet.

4. Verfahren gemäss einem der Ansprüche 1 bis 3, dadurch gekennzeichnet, dass die Diazotierungsreaktion in Gegenwart der 1- bis 40-fachen molaren Menge von Ketonen der Formel (3), bezogen auf die Molmenge der Diazokomponente, ausgeführt wird.

5. Verfahren gemäss einem der Ansprüche 1 bis 3, dadurch gekennzeichnet, dass die Diazotierungsreaktion in Gegenwart der 3- bis 12-fachen molaren Menge von Ketonen der Formel (3), bezogen auf die Molmenge der Diazokomponente, ausgeführt wird.

6. Verfahren gemäss einem der Ansprüche 1 bis 5, dadurch gekennzeichnet, dass die Kupplung bei einer Temperatur von 0 bis 40 °C erfolgt.

7. Verfahren gemäss einem der Ansprüche 1 bis 6, dadurch gekennzeichnet, dass man als Amin der Formel (2) 2-Amino-5-nitrophenol, 2-Amino-4-nitrophenol, 2-Amino-4-chlor-5-nitrophenol, 2-Anino-4-chlor-6-nitrophenol, 2-Amino-4-sulfo-6-nitrophenol, 2-Amino-4,6-dichlorphenol, 2-Amino-4-nitro-6-sulfophenol, 1-Amino-2-hydroxy-4-sulfonaphthalin oder 1-Amino-2-hydroxy-6-nitro-4-sulfonaphthalin und als Kupplungskomponente der Formel (4) 4-tert.-Butylphenol, 1-Hydroxynaphthalin-4-sulfonsäure, 1-Hydroxynaphthalin-5-sulfonsäure, 2-Hydroxynaphthalin, 1-Hydroxy-6- oder -7-aminonaphthalin-3-sulfonsäure, 1-Hydroxy-8-aminonaphthalin-3,6-disulfonsaure oder 1-Phenyl-3-methyl-5-pyrazolon verwendet.

**8.** Verfahren gemäss einem der Ansprüche 1 bis 7, dadurch gekennzeichnet, dass man nach beendeter Kupplung den gebildeten Azofarbstoff von den Ketonen durch Destillation der Ketone abtrennt oder den Farbstoff durch Filtration abtrennt und die Ketone durch Destillation vom Filtrat trennt.

**9.** Verfahren gemäss Anspruch 8, dadurch gekennzeichnet, dass man die Destillation bei einem pH-Wert von 4 bis 10, insbesondere bei einem pH-Wert von 6 bis 8, durchführt.

## Claims

**1.** A process for the preparation of azo dyes of the formula

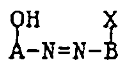
(1),

in which X is $-NH_2$ or -OH, A is a benzene or naphthalene radical which can be substituted by nitro, halogen, sulfo, $C_2$-$C_6$alkanoylamino, $C_1$-$C_6$alkoxycarbonylamino, sulfonamido and sulfone groups and B is a benzene radical which is monosubstituted or disubstituted by $C_1$-$C_6$alkyl, or a naphthalene radical which can be substituted by amino, phenylamino, $C_1$-$C_6$alkylamino and sulfo, or a 1-phenyl-3-methyl-5-pyrazolone radical which can be substituted by halogen, $C_1$-$C_6$alkyl and $C_1$-$C_6$alkoxy, these radicals being bound to the azo group in the o-position with respect to the hydroxyl or amino groups, which comprises diazotizing in aqueous solution an amine of the formula

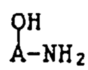
(2),

in the presence of at least one ketone of the formula

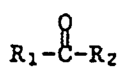
(3),

in which $R_1$ and $R_2$, independently of one another, are each $C_1$-$C_4$alkyl, and coupling the product onto a coupling component of the formula

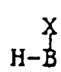
(4)

without isolating the intermediate diazotization product and with A, B and X in the formulae (2) and (4) being as defined for the formula (1).

**2.** A process according to claim 1, wherein $R_1$ and $R_2$, independently of one another, are each methyl or ethyl.

**3.** A process according to claim 1, wherein $R_1$ is methyl and $R_2$ is ethyl.

**4.** A process according to any one of claims 1 to 3, wherein the diazotization reaction is carried out in the presence of the 1- to 40-fold molar amount of ketones of the formula (3), relative to the molar amount of the diazo component.

**5.** A process according to any one of claims 1 to 3, wherein the diazotization reaction is carried out in the presence of the 3- to 12-fold molar amount of ketones of the formula (3), relative to the molar amount of the diazo component.

6. A process according to any one of claims 1 to 5, wherein the coupling reaction is carried out at a temperature of 0 to 40 °C.

7. A process according to any one of claims 1 to 6, wherein the amine of the formula (2) used is 2-amino-5-nitrophenol, 2-amino-4-nitrophenol, 2-amino-4-chloro-5-nitrophenol, 2-amino-4-chloro-6-nitrophenol, 2-amino-4-sulfo-6-nitrophenol, 2-amino-4,6-dichlorophenol, 2-amino-4-nitro-6-sulfophenol, 1-amino-2-hydroxy-4-sulfonaphthalene or 1-amino-2-hydroxy-6-nitro-4-sulfonaphthalene and the coupling component of the formula (4) used is 4-tert-butylphenol, 1-hydroxynaphthalene-4-sulfonic acid, 1-hydroxynaphthalene-5-sulfonic acid, 2-hydroxynaphthalene, 1-hydroxy-6-or -7-aminonaphthalene-3-sulfonic acid, 1-hydroxy-8-aminonaphthalene-3,6-disulfonic acid or 1-phenyl-3-methyl-5-pyrazolone.

8. A process according to any one of claims 1 to 7, wherein the azo dye formed, after the coupling reaction is completed, is separated off from the ketones by distillation of the ketones, or the dye is separated off by filtration and the ketones are separated from the filtrate by distillation.

9. A process according to claim 8, wherein the distillation is carried out at a pH of 4 to 10, in particular at a pH of 6 to 8.

**Revendications**

1. Procédé de préparation de colorants azoïques de formule :

OH X<br>
| |<br>
A-N=N-B (1)

dans laquelle X représente un groupe $-NH_2$ ou -OH, A représente un résidu de benzène ou de naphtalène, qui peut porter des substituants nitro, halogéno, sulfo, (alcanoyl en $C_2$-$C_6$)-amino, (alcoxy en $C_1$-$C_6$)-carbonylamino, sulfamoyle et sulfonyle, et B représente un résidu de benzène qui peut porter un ou deux substituants alkyle en $C_1$-$C_6$, ou un résidu de naphtalène qui peut porter des substituants amino, phénylamino, alkylamino en $C_1$-$C_6$ et sulfo, ou encore un résidu de 1-phényl-3-méthyl-5-pyrazolone qui peut porter des substituants halogéno, alkyle en $C_1$-$C_6$ et alcoxy en $C_1$-$C_6$, ces résidus étant liés au groupe azo en position ortho par rapport au groupe amino ou hydroxy, caractérisé en ce que l'on diazote, en solution aqueuse, une amine de formule :

OH<br>
|<br>
$A-NH_2$ (2)

en présence d'au moins une cétone de formule :

O<br>
‖<br>
$R_1-C-R_2$ (3)

dans laquelle $R_1$ et $R_2$ représentent chacun, indépendamment l'un de l'autre, un groupe alkyle en $C_1$-$C_4$, et en ce qu'on la fait ensuite copuler avec un copulant de formule :

X<br>
|<br>
H-B (4)

le produit de diazotation n'étant pas isolé entre-temps et les symboles A, B et X des formules (2) et (4) ayant les significations indiquées à propos de la formule (1).

2. Procédé conforme à la revendication 1, caractérisé en ce que $R_1$ et $R_2$ représentent chacun, indépendamment l'un de l'autre, un groupe méthyle ou éthyle.

3. Procédé conforme à la revendication 1, caractérisé en ce que $R_1$ représente un groupe méthyle et $R_2$ représente un groupe éthyle.

4. Procédé conforme à l'une des revendications 1 à 3, caractérisé en ce que l'on effectue la réaction de diazotation en présence d'une quantité de cétone de formule (3) représentant de 1 à 40 fois le nombre de moles du composant diazotable.

5. Procédé conforme à l'une des revendications 1 à 3, caractérisé en ce que l'on effectue la réaction de diazotation en présence d'une quantité de cétone de formule (3) représentant de 3 à 12 fois le nombre de moles du composant diazotable.

6. Procédé conforme à l'une des revendications 1 à 5, caractérisé en ce que l'on effectue la copulation à une température de 0 ° C à 40 ° C.

7. Procédé conforme à l'une des revendications 1 à 6, caractérisé en ce que l'on emploie, comme amine de formule (2), du 2-amino-5-nitrophénol, du 2-amino-4-nitrophénol, du 2-amino-4-chloro-5-nitrophénol, du 2-amino-4-chloro-6-nitrophénol, du 2-amino-4-sulfo-6-nitrophénol, du 2-amino-4,6-dichlorophénol, du 2-amino-4-nitro-6-sulfophénol, du 1-amino-2-hydroxy-4-sulfonaphtalène ou du 1-amino-2-hydroxy-6-nitro-4-sulfonaphtalène, et comme copulant de formule (4), du 4-tertiobutylphénol, de l'acide 1-hydroxynaphtalène-4-sulfonique, de l'acide 1-hydroxynaphtalène-5-sulfonique, du 2-hydroxynaphtalène, de l'acide 1-hydroxy-6- ou -7-aminonaphtalène-3-sulfonique, de l'acide 1-hydroxy-8-aminonaphtalène-3,6-disulfonique ou de la 1-phényl-3-méthyl-5-pyrazolone.

8. Procédé conforme à l'une des revendications 1 à 7, caractérisé en ce que, une fois la copulation terminée, on sépare le colorant azoïque formé d'avec la cétone par distillation de la cétone, ou bien l'on sépare le colorant par filtration et l'on sépare la cétone du filtrat par distillation.

9. Procédé conforme à la revendication 8, caractérisé en ce que l'on effectue la distillation à un pH de 4 à 10, et en particulier à un pH de 6 à 8.